# EUROPEAN PATENT SPECIFICATION

(11) **EP 0 349 814 B1**
(45) Date of publication and mention of the grant of the patent: **17.03.1993**
(21) Application number: 89111076.9
(22) Date of filing: 19.06.1989
(51) Int. Cl.: B41J 19/00, F16H 7/12

(54) **Belt stretcher for serial printer**
Seilspannvorrichtung für seriellen Drucker
Tendeur de courroie pour imprimante sérielle

(30) Priority: 07.07.1988 IT 2126288
(43) Date of publication of application: 10.01.1990
(73) Proprietor: BULL HN INFORMATION SYSTEMS ITALIA S.p.A., 10014 Caluso (Torino) (IT)
(72) Inventor: Faré, Carlo, I-20090 Limito (MI) (IT)

(56) References cited:
- DE-A- 3 537 240
- FR-A- 2 104 394
- US-A- 3 631 734
- US-A- 4 484 485
- IBM TECHNICAL DISCLOSURE BULLETIN. vol. 24, no. 7b, December 1981, NEW YORK US pages 3748 - 3750; S.W. Johnson e.a.: "Drive idler system."

## Description

The present invention relates to a belt stretcher for serial printer.

It is known that in serial printers a carriage, mounted on guiding bars reciprocates along a printing line, owing to motor means acting on the carriage through a driving cable or belt.

The motor is usually mounted on a frame side of the printer and operates a driving pulley which transfers its movement to a driving belt, stretched between the driving pulley and a return pulley.

The carriage is fixed at a suitable point of the belt.

In order to assure a correct operation of the driving mechanism and ultimately a good printing quality it is required to impose a suitable stretch to the belt.

The stretch must not be excessive to avoid wearing and damaging of the pulleys and motor bearings nor it must be too low, to avoid the generation of oscillatory phoenomena, jerking movement and ultimately an anomalous operation.

Two approaches are followed for belt stretching.

In a first approach the belt is stretched by a suitable relative positioning of the motor ant the return idle pulley, so as to establish the desired belt stretch.

Motor and/or idle pulley are then clamped in the so established position by means of clamping screws.

In the positioning phase of the motor and/or the idle pulley, springs or other devices may be used which provide the desired stretch, for instance as disclosed in US patent 4,395,151.

In a second approach the idle pulley is mounted on a slide, movable as to the driving pulley, and a spring tends to keep the slide away from the driving pulley so as to impose the desired stretch to the belt.

Both approaches have advantages and draw backs.

The first approach reduces to a minimum the carriage offset relative to the nominal position imposed by the motor, but in dynamical state is more sensitive to mechanical resonance phoenomena which cause a jerking advancement of the carriage.

The second approach avoids the resonance problems, but owing to the elastical yielding of the idle pulley constraint, causes, under dynamical conditions, relevant offset of the carriage position and ultimately a bad printing quality.

These disadvantages are overcome by the belt stretcher for serial printer of the present invention which cumulates the advantages of the two approaches.

The stretcher of the invention asssures a predetermined stretch to the belt under static conditions and operates as a steady constraint for a pulling action exerted by the belt which exceeds the imparted stretching and tends to bring the idle pulley near the driving one.

By reverse, on the occurrence of dynamical conditions which tends to reduce the stretching, the device operates as a free elastic constraints which maintains the predetermined stretch.

These results are achieved by mounting the idle pulley on a movable slide support and by the use of elastical means which, acting on the support in one direction, provides the belt stretching, whilst in the opposite direction, relatively stiff stopping devices prevents or minimize the slide displacement and exerts a reaction which cumulates with the one exerted by the elastical means.

The features and the advantages of the invention will appear more clearly from the following description of a preferred form of invention and some variants threreof and from the enclosed drawings where:
- Figures 1,2,3 shows in schematics the phoenomena which develop in belt stretchers of the conventional type with elastical stretching.
- Figure 4 is a section view of a preferred embodiment of belt stretcher according to the invention.
- Figure 5 shows in qualitative diagram the relation between reactions developed by the device of figure 4 and offsets as to a predetermined working point.
- Figure 6 is a variant of the device of figure 4.

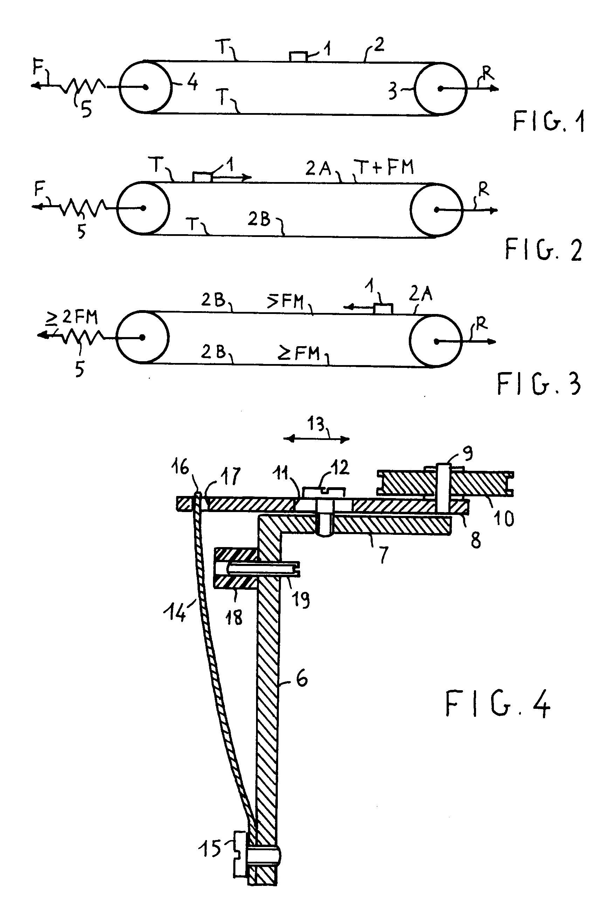

Figure 1 shows the rest state of a conventional driving mechanism for the carriage of a serial printer. The carriage 1 is fastened to a belt 2 (generally a toothed belt). The belt is wound on a driving pulley 3 and an idle return pulley 4.

The idle pulley 4 is pulled towards the left side of figure 4 by a spring 5.

The spring exerts a pull F, which for small displacements of the pulley may be considered constant. The exerted pull is in the order of 30 N (3 kg. weight).

In static conditions or in conditions of uniform carriage motion, with the assumption that friction forces are neglectable, the driving torque exerted by the driving pulley 3 is nul; the constraint reaction R exerted on driving pulley 3 is equal and opposite to F 30 N (3 Kg) and the belt is subjected to a uniform stretch T=F/2=15 N (1,5 kg).

Figure 2 shows the situation which occurs when carriage 1 is accelerated towards the right side of figure 2 for instance in order to start the printing of a line.

The carriage may typically have a weight in the order of 0,31/0,5 kg (300/500 gr) and is subjected to accelerations in the order of 98,1 m.s⁻² (10 g).

The driving pull FM exerted on the carriage, in order to impart it such acceleration, must therefore be in the order of 30/40 N (3/5 kg. weight).

Whilst the belt portion 2B comprised between carriage, idle pulley 4 and driving pulley 3 is always subjected to a stretch T=15 N (1,5 kg), the belt portion 2A, comprised between carriage and driving pulley is subjected to a stretch equal to T+FM.

The resulting elongation of the belt is recovered by the constraint displacement caused by spring 5.

Figure 3 shows the situation which occurs when carriage 1 is accelerated towards the left of figure 3. In this case the whole portion 2B of the belt 2 is subjected to a pull not lesser than FM.

The elastic constraint imposed by spring 5 must yield up to a point in which the reaction executed by spring 5 equals two time the pull.

As a consequence a relevant yield occurs and results in a carriage offset as to nominal position the carriage would have taken owing to driving pulley rotation. The offset equals two time the yield of the constraint plus the elongation of the belt.

This offset is prejudicial to the printing quality.

If the elongation of the belt causes a limited offset which may be tolerated, the offset caused by the constraint yield, much more relevant, is unacceptable.

Figure 4 is a section view of a preferred form of embodiment for a belt stretcher which overcomes this unconvenient.

In figure 4 a side plate 6 of the printer is provided with a supporting wing 7 for a movable slide 8, having the form of an elongated bar.

A post 9 is fixed at one end of the slide and acts as a journal for an idle pulley 10.

The slide has at least one slot 11, elongated in the direction of the slide. A retaining and guiding post 12, is inserted into the slot 11 and is screwed in the supporting wing 7, so that the slide can move with a suitable excursion in the direction indicated by arrows 13.

A leaf spring 14, fixed to side plate 6 by a screw 15 or other equivalent means, has the free end 16 inserted in an opening 17, drawn in the slide end opposite to the one where the idle pulley 10 is mounted.

The spring 14 is sized in order to exert a pull on the slide, towards the left side of figure 4 in the order of 30 N (3 kg) for the whole permitted stroke of the slide.

A rubber pad 18 having a central opening is fixed to the side plate 6, between plate and spring 14, by means of a pin 19, screwed in the side plate and inserted in the central opening of the pad.

The pad 18 has a suitable thickness, which defines a working point for the spring 14, around which point the response of the device is entirely different.

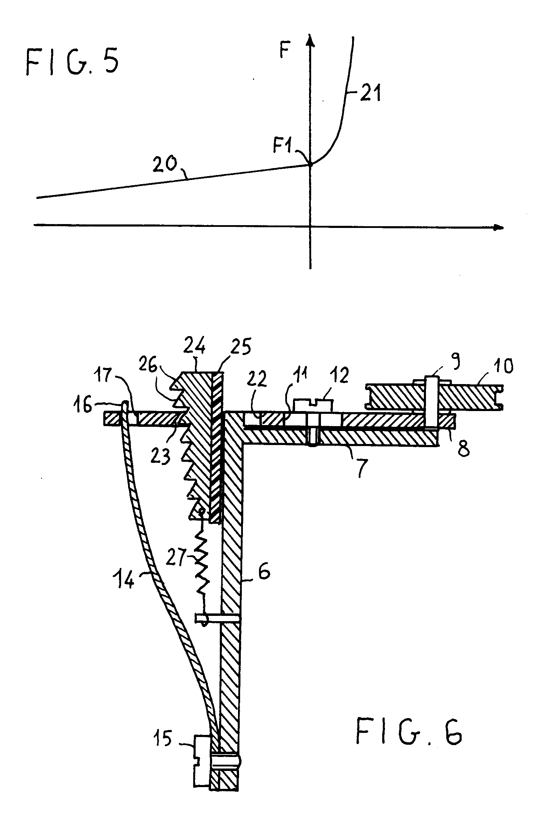

The diagram of figure 5 shows such response.

Left and right offsets from the working point are shown in abscissa.

On the ordinate the pull exerted by spring 14 on the slide is shown.

When the spring 14 is in contact with pad 18, without compressing it, the force exerted on the slide is F1, for instance in the order of 30 N (3 kg).

The working point may be choosen so as to correspond to a normal rest pull of the belt which is wound on pulley 10 and may be defined by adjusting the position of the driving pulley.

If, owing to dynamical effects such as those described with reference to figure 2, an elongation of the belt occurs without any increase in the pull exerted by the belt on the idle pulley, the spring 14 moves the slide towards the left side of figure 4 and assures a pull which depending on the offset from the working point changes according to diagram 20 of fig. 5.

The slope of diagram 20 is defined by the elastic constant of the spring.

If, owing to dynamical phoenomena as those described with reference to Fig. 3, the pull exerted by the belt on pulley 10 increases, the slide is pulled towards the right side of figure 4 and the spring 14 tends to compress pad 18.

Pad 18 exerts an increasing resisting action, with an elastic constant which is variable, anyhow much greater than the one of the spring.

Diagram 21 of figure 5 shows the relation between offsets and reactions exerted by the pad.

The reactions are transferred to the slide 8 through the spring.

It is clear that even if the pull exerted by the driving belt is greatly increased, the yield of the constraint is minimum.

It is further clear that any yield beyond a predetermined limit may be virtually prevented by providing a rigid stop for the movement of a leaf spring towards right.

This stop may be provided by pin 19, whose position may be suitably adjusted.

The function of the rubber pad 18 is the one to establish a limited working range within which the elastical constant of the device gradually increases, without discontinuities.

The resilient characteristic of the pad provides an efficacious damping of vibrations and resonance phenomena.

The device of figure 4 is only a preferred embodiment by reason of its simplicity.

It is clear that several changes can be made.

For instance, rather than defining the working point by adjusting the position of the driving pulley, it is possible to establish it by providing pin 19 with a rest plate for pad 18.

In this case pad 18, rather than resting on side plate 6 rests on a surface whose position is variable and may be defined by screwing pin 19.

Figure 6 shows a more elaborated embodiment where the working point is adjusted in automatic way and possible belt elongation occurring in the printer life can be recovered.

In figure 6 slide 8 has in addition to slot 11 for slidable mounting on support 7 and in addition to opening 17 for insertion of leaf end, a further slot 22, ended at the edge closer to opening 17, by a saw tooth 23.

A wedge 24 is inserted, in slot 22, between tooth 23 and side plate 6.

Wedge 24 has a flat surface resting on side plate 6 whilst the opposed face is toothed.

A rubber pad 25 is fixed, by glueing or other means on the flat surface.

The teeth of the toothed face define a plurality of grooves or indentations having a variable distance from pad 25.

Tooth 23 is inserted in one of such indentations.

The lower thinner portion of the wedge 24 is pulled downward by a spring 27, anchored to side plate 6.

Tooth 23 act as a pawl for wedge 24.

It is clear that in static conditions the wedge lowers at the extent permitted by the pull imposed to the belt by spring 14.

A certain allowance exists between tooth 23 and the bottom of the groove where tooth 23 is inserted.

In dynamical conditions as those shown in Fig. 2, the elongation of the belt causes a slide and tooth 23 displacement (towards the left) owing to spring 14.

As a consequence wedge 24 lowers untill interference is established between its toothing an tooth 23.

When the static conditions are reestablished and the belt elongation is recovered, tooth 23 is more deeply inserted in one of wedge 24 indentations.

By a suitable sizing of the teeth 26 height, equal to half the maximum allowed elongation of the belt, it can be obtained that tooth 23 is completely inserted in one indentation, without possibility of slide yields towards the right, except those permitted by the rubber pad yield.

In this way the belt pull may automatically be defined as well as the working point, independently of spread in the belt length or manufacturing allowances of the driving mechanic.

Further in case the belt tends to yield in the time, and the slide tends to shift, during a dynamical situation as the one of fig. 2 the wedge will further lower and recover the allowance.

Even the embodiment of figure 6 is a preferred one only and several changes can be made to it.

For instance wedge 24 may be integrally made of rubber and the hysteresis function performed by toothing 26 in combination with tooth 23 may be performed by the rubber itself, which, in static conditions is suitably prestressed.

## Claims

1. Belt stretcher (8,14,10) for serial printer in which a spring (14) imposes a predetermined stretch (T) to a drive belt (2) by applying a predetermined return force (F) to an idle pulley (4,10),
characterized by that said stretcher comprises first means (18,24,25) which add to said predetermined return force (F) an additional force increasing with small offsets of said pulley from a predetermined working point when said offsets are in the direction opposite to that of said predetermined return force.

2. Device as in claim 1 wherein said first means (18,24,25) are adjustable in position to change said predetermined working point.

3. Device as in claim 1 comprising second means (23,26,27) responsive to elongations of said belt (2), occurring during operation of said printer to change the position of said first means as a function of the offset of said pulley from said working point and in the direction of said predetermined force, whereby said working point is changed depending on the position taken by said first means so as to limit to a predetermined amount said offset in the direction of said predetermined force.

4. Device as in claim 1 wherein said first means (18,25) are resilient means.

5. Device as in claim 4 wherein said resilient means (18,25) consists in rubber.

## Patentansprüche

1. Seilspannvorrichtung (8, 14, 10) für einen Seriendrucker, bei der eine Feder (14) eine vorgegebene Spannung (T) auf ein Antriebsseil (2) ausübt, indem eine vorgegebene Rückkraft (F) auf eine Umlenkrolle (4, 10) einwirkt,
**dadurch gekennzeichnet,**
daß die Spannvorrichtung erste Mittel (18, 24, 25) aufweist, welche der vorgegebenen Rückkraft (F) eine Zusatzkraft hinzufügen, die bei kleinen Verschiebungen der Umlenkrolle aus einer vorgegebenen Arbeitsstellung anwächst, sofern die Verschiebungen der vorgegebenen Rückkraft entgegengerichtet sind.

2. Vorrichtung nach Anspruch 1, bei der die ersten Mittel (18, 24, 25) in ihrer Position einstellbar sind, um den vorgegebenen Arbeitspunkt zu verändern.

3. Vorrichtung nach Anspruch 1, mit auf während des Druckerbetriebs auftretende Dehnungen des Seils (2) ansprechenden zweiten Mitteln (23, 26, 27), welche die Position der ersten Mittel als Funktion des Versatzes der Umlenkrolle gegenüber der Arbeitsstellung in Richtung der vorgegebenen Kraft verändern, wodurch die Arbeitsstellung in Abhängigkeit von der jeweiligen Position der ersten Mittel verändert und die Verschiebung in Richtung der vorgegebenen Kraft auf einen vorgegebenen Betrag begrenzt wird.

4. Vorrichtung nach Anspruch 1, bei der die ersten Mittel (18, 25) elastischen Mittel sind.

5. Vorrichtung nach Anspruch 4, **dadurch gekennzeichnet**, daß die elastischen Mittel (18, 25) aus Gummi bestehen.

## Revendications

1. Tendeur de courroie (8, 14, 10) pour imprimante série dans laquelle un ressort (14) impose une tension prédéterminée (T) à une courroie d'entraînement (2) en appliquant une force de renvoi prédéterminée (F) à une poulie folle (4, 10), caractérisé en ce que ledit tendeur comprend un premier moyen (18, 24, 25) qui ajoute à ladite force de renvoi prédéterminée (F) une force supplémentaire croissante avec de petits décalages de ladite poulie à partir d'un point de fonctionnement prédéterminé lorsque lesdits décalages vont dans le sens contraire à celui de ladite force de renvoi prédéterminée.

2. Dispositif selon la revendication 1 où lesdits premiers moyens (18, 24, 25) sont réglables en position pour changer ledit point de fonctionnement prédéterminé.

3. Dispositif selon la revendication 1 comprenant des seconds moyens (23. 26, 27) sensibles aux allongements de ladite courroie (2), qui se produisent pendant le fonctionnement de ladite imprimante pour changer la position desdits premiers moyens en fonction du décalage de ladite poulie par rapport audit point de fonctionnement et dans le sens de ladite force prédéterminée, où de ce fait ledit point de fonctionnement est changé en fonction de la position prise par lesdits premiers moyens de façon à limiter de manière prédéterminée ledit décalage dans le sens de ladite force prédéterminée.

4. Dispositif selon la revendication 1 où lesdits premiers moyens (18, 25) sont des moyens résilients.

5. Dispositif selon la revendication 4 où lesdits moyens résilients (18, 25) sont faits en caoutchouc.
